# EUROPÄISCHE PATENTSCHRIFT

(11) **EP 0 559 032 B1**
(45) Veröffentlichungstag und Bekanntmachung des Hinweises auf die Patenterteilung: **16.10.1996**
(21) Anmeldenummer: 93102695.9
(22) Anmeldetag: 20.02.1993
(51) Int. Cl.: B65G 17/32, B08B 9/08, B08B 101/08

(54) **Vorrichtung zum Transport von Gegenständen**
Transport device for objects
Dispositif de transport pour objets

(30) Priorität: 29.02.1992 DE 4206364; 30.07.1992 DE 4225147
(43) Veröffentlichungstag der Anmeldung: 08.09.1993
(73) Patentinhaber: Haberstroh, Karl, D-78239 Rielasingen-Worblingen (DE)
(72) Erfinder: Haberstroh, Karl, D-78239 Rielasingen-Worblingen (DE)
(74) Vertreter: Weiss, Peter, Dr. rer.nat.

(56) Entgegenhaltungen:
- WO-A-87/06921
- FR-A- 2 286 771
- GB-A- 753 518
- US-A- 2 360 209

## Beschreibung

Die Erfindung betrifft eine Vorrichtung zum Transport von Gegenständen, insbesondere von Hohlkörpern, wie Aerosoldosen, durch eine Wasch-, eine Spül- und/oder Trockenzone und/oder zur Übergabe von Hohlkörpern von einem Transportelement zu einem anderen.

Aerosoldosen od. dgl. Hohlkörper bestehen heute in der Regel aus Aluminium oder Weißblech und werden im Tiefziehverfahren hergestellt. Dies erfolgt unter Zugabe von Schmiermitteln, so daß vor einer weiteren Behandlung der Dose eine Reinigung unabdingbar ist. Das industrielle Reinigen von diesen Dosen findet in Waschzonen von Waschmaschinen statt, wobei die zu reinigenden Dosen über verschiedene Umlenkwalzen durch die Waschzone ggfs. mit einer Vorspülzone, geführt werden. Damit die Waschlauge in das Doseninnere gelangen kann, sollte die Dose in waagrechter Lage geführt sein.

Nach der Waschzone erfolgt ein Spülen der Dose in verschiedenen Spülzonen, wobei auch hier die Dose von der Transportkette über Umlenkwalzen durch die Spülzone geführt werden. Dies geschieht selbstverständlich ebenfalls in einer waagrechten Ausrichtung der Dose, wobei diese noch zusätzlich durch Seitenplatten od. dgl. gegen ein Abschwimmen gesichert sind. Die Dosen befinden sich damit auf Dornen an der Kette. Nach der Spülzone ist es üblich, die Dosen von der Transportkette zu nehmen und einem speziellen Trockenraum zuzuführen. In diesen Trockenraum sollte die Dose mit der Öffnung nach unten geführt und von Warmluft beaufschlagt sein. Eine derartige Vorrichtung ist beispielsweise in der WO 87/06921 beschrieben.

Die bislang bekannten Waschmaschinen haben den Nachteil, daß bei Führung der Dosen an Dornen die Dose nicht in einer gesicherten Lage gehalten sind. Deshalb müssen immer zusätzliche Einrichtungen vorhanden sein, welche ein Abschwimmen der Dosen verhindern. Ferner kann sich in der Dose ein Luftpolster bilden, so daß die Dose zumindest teilweise in der Wasch- und/oder Spülzone gekippt an einem Dorn geführt wird. Das Luftpolster verhindert ein Benetzen des Dosenbodens mit Waschlauge bzw. Spülwasser.

Auch die Übergabe der Dosen von einer Kette zur anderen birgt erhebliche Gefahren in sich. Um diese zusätzlichen Arbeitsschritte zu vermeiden, ist in der WO 87/06921 eine einzige Transportkette vorgeschlagen, welche die Dosen durch Wasch-, Spül- und Trockenzone führt. Allerdings ist in diesem Fall die Kette einem erheblichen Verschleiß ausgesetzt.

Ferner ist aus der GB 753 581 ein Transportband bekannt, welches in einem Band Schlitze mit Taschen aufweist, welche in das Band selbst eingeformt sind. Nachteilig daran ist, daß das elastische Band leicht spröde wird und bei hohen Geschwindigkeit zu stark erwärmt wird.

Der vorliegenden Erfindung liegt die Aufgabe zugrunde, eine Vorrichtung der o.g. Art zu entwickeln, bei der eine Führung der Dose durch Wasch- und/oder Spülzone in einer gesicherten Position der Dose erfolgt und/oder bei der die Übergabe einer Dosen von einer Transportkette zur anderen wesentlich erleichtert wird.

Zur Lösung dieser Aufgabe führt, daß auf einer Walze, einem Band od. dgl. Schienen parallel zueinander angeordnet sind, deren zueinander ausgerichtete Seitenwände konkave Höhlungen aufweisen, so daß eine Aufnahme für den Hohlkörper gebildet ist, wobei die Aufnahme querschnittlich etwa kreisförmig ausgebildet ist und einen Durchmesser aufweist, der geringfügig größer ist als der Durchmesser des Hohlkörpers, daß die Schiene, welche aus Kunststoff besteht, austauschbar, beispielsweise von Krallenstreifen eines Profils, welches auf der Walze bzw. dem Band festliegt, gehalten ist.

Diese Aufnahme ist so ausgestaltet, daß sie in etwa der Kontur des Hohlkörpers entspricht, jedoch diesen mit geringem Abstand umfängt. Ist beispielsweise der Hohlkörper eine zylindrische Dose, so soll die Aufnahme querschnittlich etwa kreisförmig ausgebildet sein und einen Durchmesser aufweisen, der geringfügig größer ist als der Durchmesser des Hohlkörpers. Die konkaven Höhlungen bewirken vor allem, daß die Aufnahme zum Walzenumfang hin, der von der Oberfläche der Schiene gebildet wird, bis auf einen geringen Schlitz geschlossen ist. D.h., der Hohlkörper kann aus der Aufnahme nur in etwa parallel zur Walzenachse ein- bzw. ausgetragen werden, er kann aber nicht aus dem Walzenmantel abschwimmen. Insofern ist eine wesentlich gesichertere Halterung und Führung des Hohlkörpers gegeben, zumal in der Aufnahme noch bestimmte Adhäsionskräfte wirken. Ferner wird auch eine waagrechte Führung des Hohlkörpers eingehalten, so daß sich kaum ein Luftpolster in dem Hohlkörper ansammeln kann. Geschieht dies doch, so wird dennoch auch der Boden des Hohlkörpers gänzlich mit Waschlauge bzw. Spülflüssigkeit benetzt, da der Hohlkörper beim Drehen der Walze mitdreht, jedoch sich nicht selbsttätig in der Aufnahme dreht.

Bevorzugt bestehen die Schienen aus einem Kunststoff, welcher wesentlich weniger verschleißanfällig gegebenüber der aggressiven Waschlauge ist.

Zur Halterung der Schiene ist im übrigen in einem Ausführungsbeispiel ein Profil vorgesehen, welches mit Krallenstreifen in die Schiene eingreift und diese an der Walze bzw. dem Band festhält. Zum Festlegen des Profils können dann beispielsweise Schrauben od. dgl. dienen.

Bei Dosen mit einem relativ geringen Halsdurchmesser hat es sich als schwierig erwiesen, diese Dosen aus einer Aufnahme einer Walze bzw. eines später beschriebenen Bandes auf einen Dorn zu übergeben, da hierfür infolge des geringen Dosendurchmessers eine relativ hohe Genauigkeit bzw. ein Ausrichten des Dorns auf die Aufnahme notwendig ist. Eine Lösung dieses Problems bietet eine Schiene, welche keine durchgehende Aufnahme gleichen Durchmessers hat, sondern die dem Dorn zugewandt mit einer Füllung verschlossen ist und lediglich eine Halbbohrung zur Aufnahme eines Teiles des Dorns aufweist. In Gebrauchslage bilden zwei nebeneinander liegende Schienen eine Bohrung, welche den Dorn umschließen und ihn so halten. Hierdurch wird der Dorn nicht nur gegenüber einer Dosenöffnung zentriert, sondern es wird auch ein Wackeln des Dornes weitgehend vermieden. Zu diesem Zweck sollte der Dorn so in der Aufnahme angeordnet sein, daß sich seine Spitze nahe der Aufnahme befindet, aus der eine Dose auf den Dorn übertragen wird. Hier sind eine Vielzahl von Möglichkeiten denkbar und sollen vom Erfindungsgedanken umfaßt sein.

In dem Ausführungsbeispiel der Erfindung mit der Walze, welche eine Vielzahl von entsprechenden Aufnahmen nahe ihrem Umfange aufweisen, sitzt diese Walze auf einer Drehwelle und wird von einem entsprechenden Antrieb angetrieben. In dem zweiten Ausführungsbeispiel der Erfindung sind die Schienen auf einem Band angeordnet, wobei dieses Band zumindest ein Obertrum und ein Untertrum teilweise umschlingt. Eine Walze hat zwar Vorteile, was die Festlegung der Schienen anbelangt, kann aber auch zu erheblichen Platzproblemen führen. Auf einem Walzenumfang können nur eine bestimmte Anzahl von Aufnahmen vorgesehen werden, die von dem Durchmesser des Hohlkörpers abhängen. Je mehr Aufnahmen pro Walze vorgesehen sein sollen, umso größer wird der Durchmesser dieser Walze. dabei stellt aber der Walzenkern einen toten Raum dar. Dieser Nachteil könnte durch das erfindungsgemäße Band ausgeglichen werde, wobei beispielsweise der Waschbehälter auch sehr schmal gehalten werden kann, dafür aber eine größere Höhe aufweist. Ein weiterer wesentlicher Vorteil des Bandes liegt aber darin, daß der Durchmesser der Aufnahme während der Umlenkung des Bandes, d.h., während der Umschlingung von Obertrum und Untertrum größer ist, so daß hier leichter eine Dose in die Aufnahme ein oder aus ihr herausgeführt werden kann. Auf den geraden Stücken zwischen Obertrum und Untertrum verkleinert sich dagegen der Durchmesser der Aufnahme, so daß die Dose besser umschlossen und damit fester gehalten wird. Hierdurch erübrigt sich jede Maßnahme, die ein Abschwimmen der Dosen verhindern soll. Ein Einklemmen der Dose soll allerdings vermieden werden.

Das Ein- und Austragen der Dosen aus den Aufnahmen erfolgt bevorzugt mittels einer Düse, aus der die Dosen mit Druckluft angeströmt werden. Jedoch sind auch hier andere Strömungsmedien denkbar. Gegenüber der Düse soll zumindest zeitweise ein Anschlag in die lichte Weite der Aufnahme einragen, damit ein unbeabsichtigtes Durchschießen der Dose durch eine Aufnahme vermieden wird. Die Anordnung eines derartigen Anschlages ist aber den entsprechenden Gegebenheiten und Wünschen anzupassen.

Während sich die eben beschriebenen Walzen gemeinsam an einer Drehwelle befinden, kann es wünschens wert sein, die Walzen innerhalb der Wasch- und Spülzone anders anzuordnen. Hier ist beispielsweise die Drehung der Walze um 90° gegen die Förderrichtung denkbar, so daß jede Walze eine eigene Drehwelle besitzt. Dadurch ist eine Wartung und ein Austausch der Walzen beispielsweise bei einer Beschädigung erleichtert. Ferner kann jede Walze für sich auch angetrieben werden, was in manchen Fällen wünschenswert ist. Eine relativ kurze Drehwelle bedarf keiner zusätzlichen Abstützung, wie diese bei einer in Förderrichtung verlaufenden durchgehenden Welle durch den gesamten Behälter notwendig ist.

Sind die Aufnahmen quer zur Förderrichtung angeordnet, so muß eine Übertragung der Dosen von einer Walze auf die andere stattfinden. Dies geschieht mittels einer Kette und entsprechenden daran angeordneten Dornen, auf die jeweils immer die Dose von einer Walze aufgeschossen und zur nächsten Walze transportiert und dort in eine Aufnahme übergeben wird. Dementsprechend verläuft die Kette zwischen den einzelnen Walzen, geführt an Umlenkrollen etwa wellenförmig, jedoch sind auch andere Ausgestaltungen denkbar. Für die Übergabe ist allerdings nur der Bereich der Walze oberhalb des Behälterrandes möglich, da die Kette außerhalb des Behälters verläuft. Denkbar ist dabei auch, daß die Kette gleichzeitig die Behälter in den entsprechenden Trockenofen führt.

Eine derartige erfindungsgemässe Walze bzw. ein derartiges Band soll zum einen in der Waschzone und auch bevorzugt in der Spülzone Anwendung finden. Die Übergabe von den Dosen erfolgt dabei von Aufnahme zu Aufnahme, wobei sämtliche Walzen auf einer gemeinsamen Drehwelle angeordnet sind und die Aufnahmen in einer Achse parallel zur Achse der Drehwelle liegen. Das gleiche gilt auch für die Anordnung eines Bandes, wobei dann Obertrum und Untertrum auf entsprechenden Drehwellen angeordnet sind.

In einer weiteren Ausführungsform der Erfindung kann eine derartige Walze oder ein Band aber auch als Übergabeeinrichtung für Hohlkörper von einer Kette auf eine andere oder von einer Walze bzw. einem Band auf eine Kette benutzt werden. Selbstverständlich ist auch denkbar, daß in einer Waschmaschine eine erfindungsgemäße Walze oder ein Band nur als Übergabeeinrichtung verwendet wird. Die Führung der Hohlkörper durch Wasch- und Spülzone erfolgt dann, wie bisher, an einer Kette. Diese und andere Verwendungsmöglichkeiten sollen vom vorliegenden Erfindungsgedanken umfaßt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Frontansicht einer erfindungsgemäßen Waschmaschine für Dosen;
Figur 2 eine perspektivische Darstellung eines Ausschnitts aus einer Waschmaschine gemäß Figur 1;
Figur 3 eine vergrößert dargestellte Frontansicht einer erfindungsgemäßen Walze zum Befördern von Dosen;
Figur 4 ein teilweise dargestellter Ausschnitt aus einem erfindungsgemäßen Förderband zum Transportieren von Dosen durch beispielsweise eine Wasch- und Spülzone;
Figur 5 einen Querschnitt durch eine erfindungsgemäße Übergabeeinrichtung für Dosen;
Figur 6 eine perspektivische Ansicht eines weiteren Ausführungsbeispiels einer erfindungsgemäßen Übergabeeinrichtung für Dosen;
Figur 7 eine perspektivische Ansicht eines Ausführungsbeispiels einer erfindungsgemäßen Schiene in Gebrauchslage;
Figur 8 eine Draufsicht auf einen Teil einer Übergabeeinrichtung gemäß Figur 6;
Figur 9 eine schematische Seitenansicht eines weiteren Ausführungsbeispiels eines Ausschnittes aus einer Waschmaschine;
Figur 10 eine Stirnansicht des Ausschnitts aus dem Ausführungsbeispiel einer Waschmaschine gemäß Figur 9.

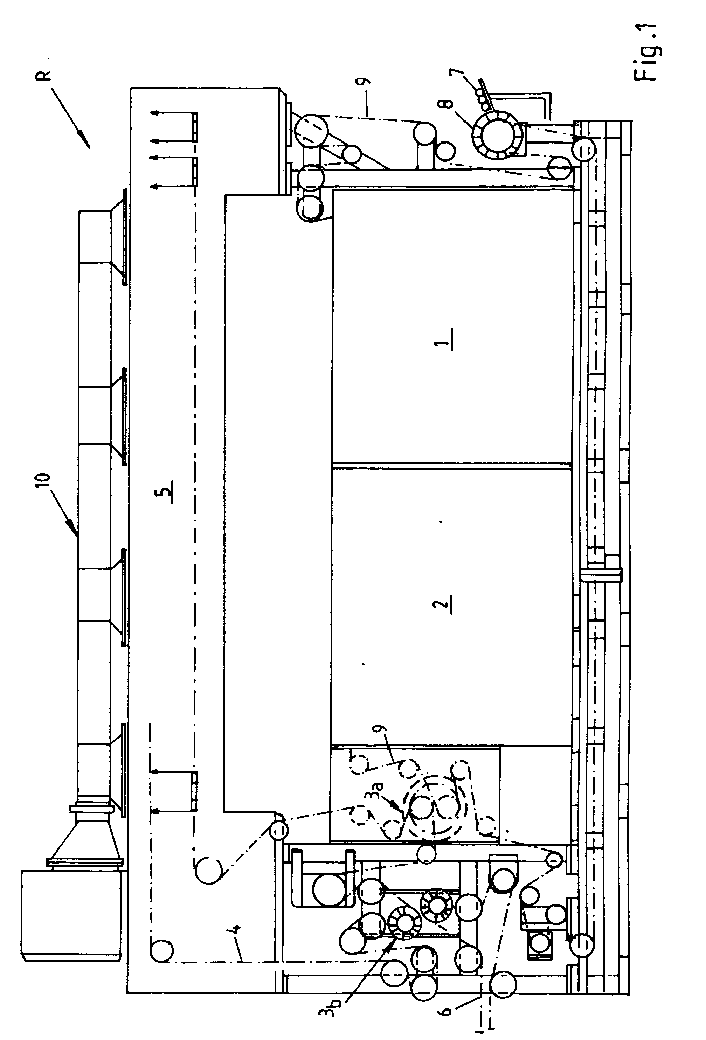

Gemäß Figur 1 weist eine erfindungsgemäße Waschmaschine R eine Waschzone 1 mit ggfs. einer Vorwaschzone auf. Auf diese Waschzone 1 folgt eine Spülzone 2, an welche Übergabeeinrichtungen 3 anschließen. Eine Übergabe erfolgt dabei von der Spülzone 2 zu einer Förderkette 4, welche Dosen 7 in einen Trockenofen 5 transportieren kann. Diese erste Übergabeeinrichtung ist mit 3a angedeutet. Eine zweite Übergabeeinrichtung 3b sieht vor, daß Dosen von der Förderkette 4 auf eine weitere Kette 6 übergeben werden können, welche zu einem Speicher führt.

Die Funktionsweise der erfindungsgemäßen Waschmaschine R ist folgende:

Rechtsseitig erfolgt ein Einlaufen von Dosen 7 in einen Einlaufstern 8. Dieser Einlaufstern 8 entspricht dem Stand der Technik, wobei die Dosen 7 von ihm auf eine Transportkette 9 übergeben werden. Diese Transportkette 9 führt über eine Mehrzahl von nicht näher gekennzeichneten Umlenkrollen die Dosen 7 in die Waschzone 1. In dieser Waschzone 1 werden die Dosen wiederum über eine Mehrzahl von Umlenkrollen durch eine Waschflüssigkeit geführt und gereinigt. Danach laufen dann die Dosen 7 in die Spülzone 2 ein, wobei in dieser Spülzone 2 eine Reinigung der Dose 7 mit dem Waschmittel stattfindet.

Am Ende läuft die Transportkette 9 aus der Spülzone 2 aus und passiert die erste Übergabeeinrichtung 3a. In dieser Übergabeeinrichtung 3a, welche später als Ausführungsbeispiel noch beschrieben wird, erfolgt eine Übergabe der Dosen von der Transportkette 9 auf die Förderkette 4. Diese Förderkette 4 bringt die Dosen 7 in den Trockenofen 5, in welchem die Dosen 7 mit Heissluft beaufschlagt werden. Zum Einbringen der Heissluft in den Trockenofen 5 ist ein entsprechendes Gebläse 10 vorgesehen. Bevorzugt werden die Dosen 7 in dem Trockenofen 5 in aufgestellter Ausrichtung geführt, wobei die Öffnung der Dosen nach unten zeigt. Eine entsprechende Kette, die diese Aufrichtung auf einfache Art und Weise zuläßt, ist in der P 42 00 579.5 angegeben.

Nach Verlassen des Trockenofens 5 passiert die Förderkette 4 eine weitere Übergabeeinrichtung 3b, in der die Dosen 7 auf die Kette 6 zu einem nicht näher gezeigten Speicher übergeben werden.

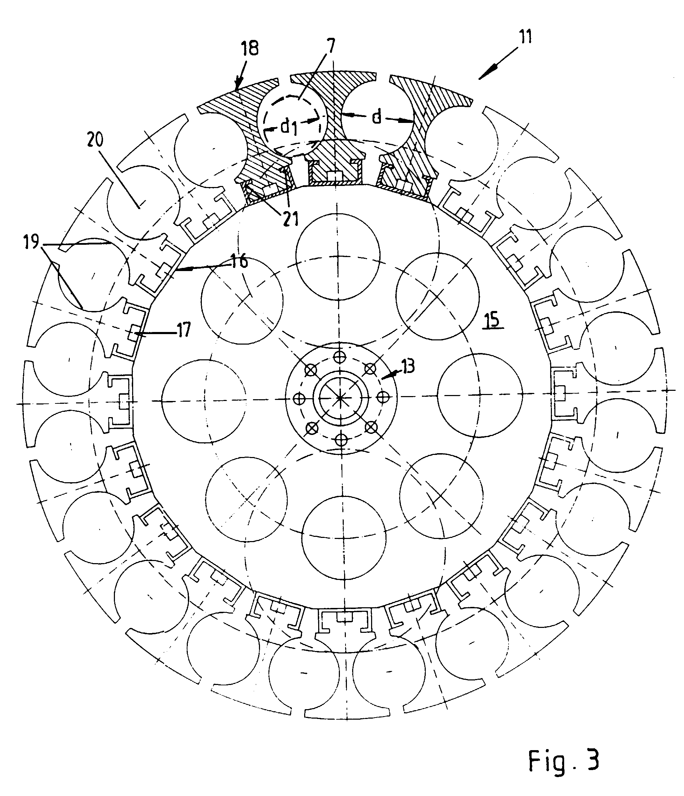

Erfindungsgemäß soll nun die Transportkette 9 durch Walzen ersetzt werden, welche bevorzugt in Wasch- und Spülzone 1 und 2 angeordnet sind und welche der Aufnahme und Führung der Dosen 7 durch die Wasch- und Spülzone dienen. In Figur 3 sind derartige Walzen 11 gezeigt, welche in einem Behälter 12 sitzen. Dieser Behälter 12 beinhaltet sowohl die Waschzone 1 wie auch die Waschzone 2, wobei die entsprechenden Zonen durch eine nicht näher gezeigte Zwischenwand, beispielsweise zwischen zwei Walzen 11, getrennt sind.

In dem Behälter 12 lagern die Walzen 11 an einer Drehwelle 13, so daß eine synchrone Drehbewegung sämtlicher Walzen 11 durchgeführt wird. Die Drehwelle 13 benötigt dann nur jeweils beim Austritt aus dem Behälter 12 eine entsprechend abgedichtete Lagerschale 14. Ein Antrieb für die Drehwelle 13 ist der Übersichtlichkeit halber vernachlässigt.

Ein Beispiel einer Walze 11 ist in Figur 3 zum Teil im Querschnitt gezeigt. Dabei ist auf der Drehwelle 13 ein Walzenkörper 15 vorgesehen, auf den umfangsseitig eine Mehrzahl von gleich beabstandeten Profilen 16 aufgeschraubt sind. Das Aufschrauben geschieht mittels entsprechender Schraubenbolzen 17.

Jedes Profil 16 ist krallenartig ausgebildet und hält eine Schiene 18, wobei zwischen zwei benachbarten Schienen eine nur gestrichelt angedeutete Dose 7 geführt ist. Hierzu sind jeder Schiene 18 von beiden Seiten her konkave Höhlungen 19 eingeformt, so daß eine kreisförmige Aufnahme 20 zwischen zwei Schienen 18 gebildet ist, deren Durchmesser d geringfügig größer ist als ein Druchmesser d1 der Dose 7. Hierdurch kann die Dose 7 in der Aufnahme 20 gleiten.

Zur Halterung der Schiene 18 dienen im übrigen Krallenstreifen 21, welche an dem Profil 16 vorgesehen sind. Die Übergabe einer Dose 7 in die erste Walze 11a erfolgt bevorzugt durch Druckluft, wobei die Dose beispielsweise an einer entsprechenden Kette geführt sein kann. Da jedoch zu einer störungsfreien Übergabe eine relativ genaue Zentrierung der Dose 7 im Verhältnis zu der kreisförmigen Aufnahme 20 erforderlich ist, kann der ersten Walze 11a eine weitere Walze, eventuell sogar auf der gleichen Drehwelle 13 vorgeschaltet sein, die kongruente Aufnahmen 20 besitzt, mit der Ausnahme, daß diese Aufnahmen umfangwärtig offen sind. In diese offenen Aufnahmen können dann, wie beispielsweise in Figur 1 bei dem Einlaufstern 8 angedeutet, die Dosen 7 von der Seite her einfallen und nach oben befördert werden. Sobald diese nicht näher gezeigte offene Aufnahme mit der kreisförmigen Aufnahme 20a übereinstimmt, wird durch einen Druckluftstrom die Dosen aus der offenen Aufnahme in die Aufnahme 20a gefördert, wobei eine Begrenzung des Dosenschusses durch eine Stange 23 erfolgt.

Jetzt kann die Dose 7 in das Waschmittel 1 eingetaucht werden, wobei sie im wesentlichen in der kreisförmigen Aufnahme 20 gehalten ist. Zusätzliche Sicherungseinrichtungen, welche ein Abschwimmen der Dose verhindern sollen, können entfallen. Zudem wird durch die kreisförmige Aufnahme 20 ein zu starkes Verkanten der Dosen vermieden, so daß sich auch kein Luftpolster in der Dose 7 ansammeln kann. Ferner wird die Dose 7 bei der Drehung der Walze 11 mitgedreht, so daß möglicherweise vorhandene Luft entweicht.

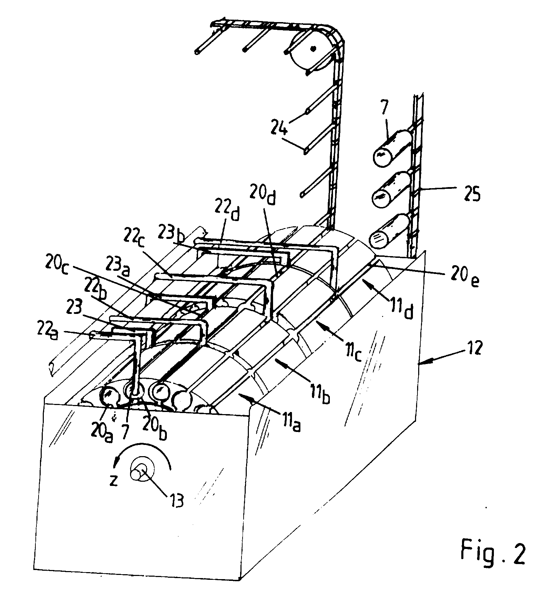

Im vorliegenden Ausführungsbeispiel erfolgt die Drehung der Drehwelle 13 in Richtung z, d.h., gegen den Uhrzeigersinn. Nach einer Drehung von über 360° kommt dann die Dose mit der Aufnahme 20a an die Position der in Figur 2 gezeigten Aufnahme 20b. Hier kann nun die Dose von einem Luftstrahl einer Düse 22 mit Druckluft beaufschlagt werden, wodurch die Dose 7 in eine Aufnahme 20c in der nachfolgenden Walze 11b gefördert wird. Der Dosenschuß hier wird von einer Stange 23a als Stoppeinrichtung begrenzt, welche zwischen die Walze 11b und die Walze 11c eingreift, so daß sie vor der Öffnung der Aufnahme 20c liegt. Selbstverständlich sind hier auch andere Möglichkeiten denkbar.

Nach Drehung der Walze 11b um mehr als 360° kommt die Ausnehmung 20c vor einer weiteren Düse 22b zu liegen, welche einen Luftstoß abgibt. Hierdurch wird die Dose 7 in eine Aufnahme 20d der Walze 11c geschossen, wobei der Schuß wiederum durch eine Stange 23b begrenzt ist. Die Dose dreht dann in der Walze 11c, wobei sich diese Walze 11c bereits in der Spülzone befindet. Der Schuß der Dose 7 von der Walze 11b zur Walze 11c erfolgt deshalb über die Oberkante einer o.g. Zwischenwand zwischen Waschzone und Spülzone. Nach einer weiteren Drehung von über 360° der Walze 11c wird dann ein weiterer Transport der Dose 7 zur Walze 11d bewirkt, was wiederum mittels Druckluft aus einer Düse 22c geschieht. Mit der Walze 11d dreht die Dose nochmals um über 360° und kommt dann vor einer Düse 22d zu liegen, deren Luftstoß die Dose 7 austrägt. In diesem Augenblick befindet sich nahe der entsprechenden Aufnahme 20d der Walze 11d ein Dorn 24 an einer Kette 25, so daß die Dosen 7 diesem Dorn 24 aufgeschossen wird. Die Kette 25 fördert dann die Dose 7 beispielsweise in den Trockenofen 5.

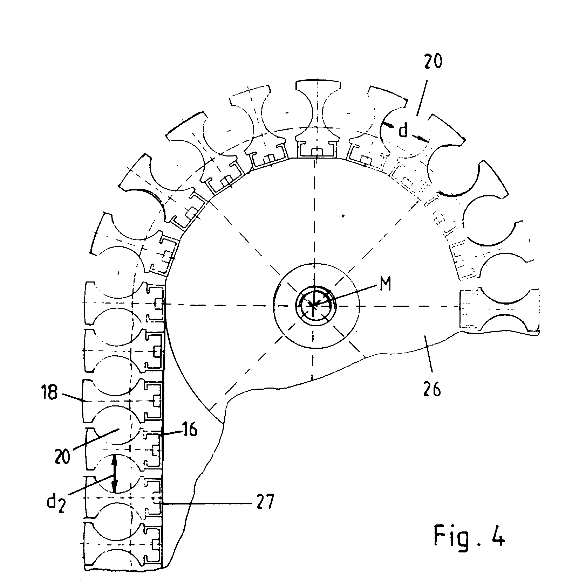

In einem weiteren Ausführungsbeispiel der Erfindung gemäß Figur 4 ist um ein Obertrum 26 ein Band 27 gelegt, welches, nicht gezeigt, auch ein Untertrum als Endlosband umschlingt. Auf diesem Band sind die Profile 16 und auch die Schienen 18 angeordnet. Es ist deutlich erkennbar, daß infolge der Anordnung und Ausgestaltung der Schiene sich die kreisförmige Aufnahme 20 im Bereich über der waagrechten Ebene des Mittelpunktes M des Obertrums 26 öffnen, so daß sich dort der Durchmesser d im Verhältnis zu einem Durchmesser d2 erweitert. Sobald dann das Band 27 wieder in eine gerade Strecke übergeht, schließt sich die Aufnahme 20, wobei eine eingelegte Dose 7 festgeklemmt wird. Das bedeutet aber auch, daß in diesem Bereich beispielsweise eine seitliche Führungsplatte nicht notwendig wird, da ein Ausschwimmen der Dosen aus der Aufnahme 20 vermieden wird. Ferner ist durch diese Ausgestaltung möglich, den Behälter 12 weniger breit, dafür aber höher zu bauen. Hierdurch können trotz geringeren Platzbedarfes in der Breite genauso viele oder mehr Dosen auf dem Band 27 untergebracht werden, als auf der Walze 11.

Es versteht sich von selbst, daß auch das Band 27 über noch mehr Umlenkrollen geführt werden kann, je nach dem wie der Platzbedarf und die Auslegung des Behälters 12 ist. Ein Schutz gegen Abschwimmen muß höchstens bei den Umlenkungen stattfinden.

Eine erfindungsgemäße Walze 11 oder ein Band 27 bietet sich auch besonders als Übergabeeinrichtung 3 an. Dies ist in Figur 1 mit der Übergabeeinrichtung 3a angedeutet. Auch hier befindet sich die entsprechende Walze 11 auf einer Drehwelle 13 und weist die kreisförmigen Aufnahmen 20 auf. In der oberen Aufnahme 20 liegt eine Dose 7.

Sollen beispielsweise Dosen von der Transportkette 9 auf die Förderkette 4 übertragen werden, so ist ein Teil der Transportkette 9 mit zwei Dornen 24 angedeutet, an der Dosen 7 hängen. Die untere Dose 7 wird über eine Düse 28 mit Druckluft beaufschlagt, so daß sie von dem Dorn 24 in die Aufnahme 20 geblasen wird. Der Schuß der Dose 7 wird durch eine anderseitige Anschlagplatte 29 gebremst.

Die Dose 7 gelangt dann bei der Drehung der Walze 11 nach oben, wobei dort ein weitere Düse 30 gegenüber der Anschlagplatte 29 angeordnet ist, welche die Dose 7 auf einen Dorn 24 der Förderkette 4 schießt.

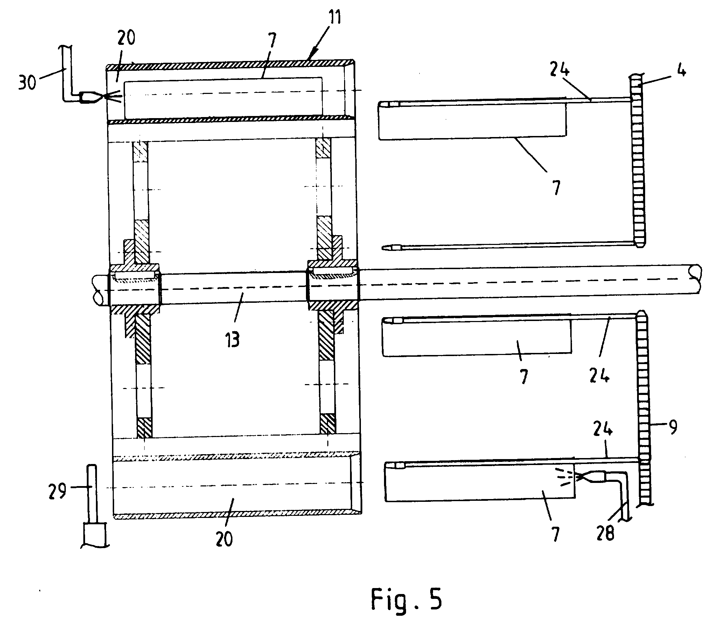

Es versteht sich von selbst, daß bei Anordnung von Walzen in Spülbehältern auch eine Übergabe von der letzten Walze 11 im Spülbehälter durch beispielsweise eine in Figur 5 gezeigte Übergabewalze erfolgen kann. In diesem Fall ist die letzte Walze im Spülbehälter anstelle der Transportkette 9 in Figur 5 vorgesehen. Dies soll ein weiteres Auführungsbeispiel der Erfindung darstellen, wobei auch noch weitere Anwendungen der Walze bzw. des Bandes denkbar sind.

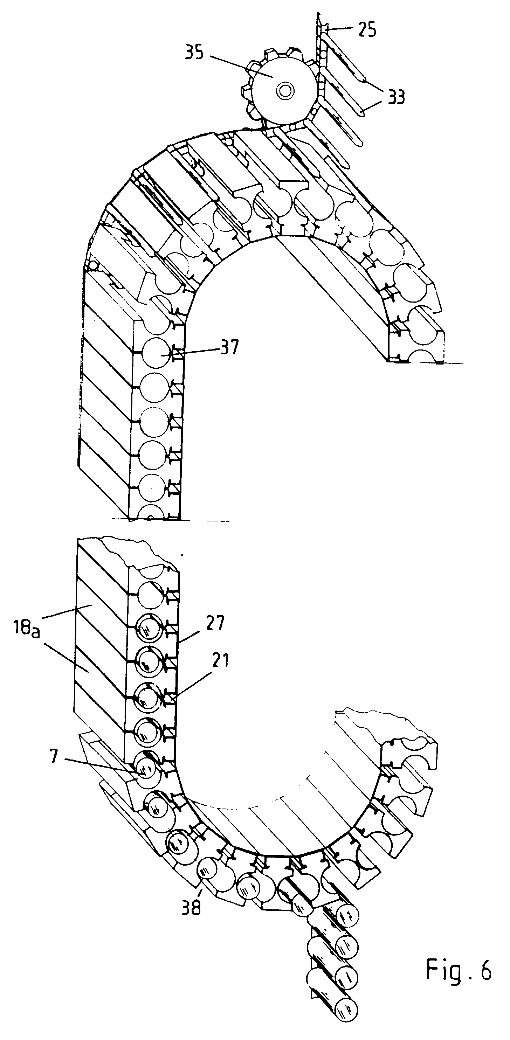

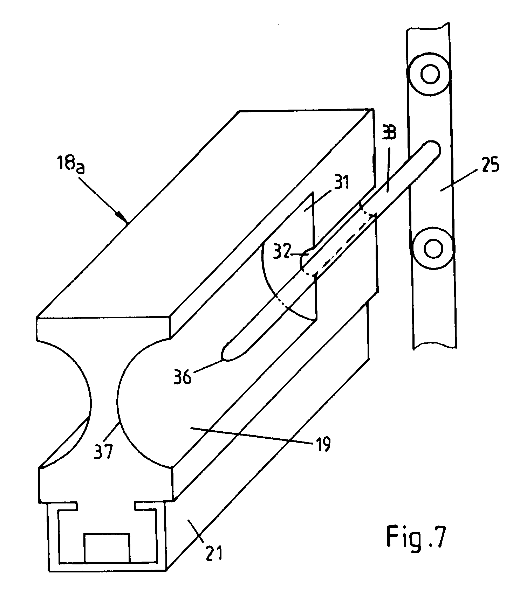

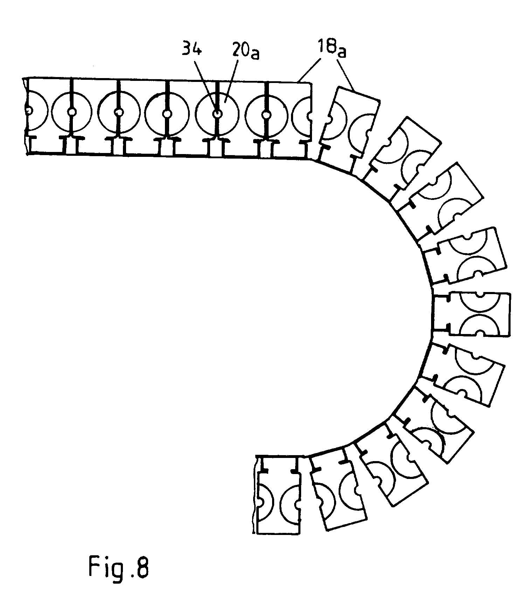

In einem weiteren Ausführungsbeispiel der Erfindung gemäß Figur 6 ist an dem Band 27 eine geringfügig anders ausgebildete Schiene 18a befestigt und durch entsprechende Krallenstreifen 21 gehalten. Eine derartige Schiene 18a ist noch besser in Figur 7 und 8 erkennbar. Im vorderen Bereich besitzt die Schiene 18a ebenfalls die konkave Höhlung 19, welche jedoch nicht durchgehend ausgebildet sondern im hinteren Bereich mit einer Füllung 31 verschlossen ist. Etwa zentrisch ist in dieser Füllung 31 eine Halbbohrung 32 eingeformt, welche mit einer weiteren Halbbohrung 32 der benachbarten Schiene 18a eine Bohrung zur Aufnahme eines Fangstiftes 33 ausbildet.

Herstellungstechnisch wird die Füllung 31 bevorzugt dadurch erzeugt, daß in diesem Bereich keine spanabhebende Bearbeitung bezüglich der konkaven Höhlung 19 sondern nur bezüglich der Halbbohrung 32 erfolgt.

In Figur 8 ist erkennbar, daß sich benachbarte Schienen 18a nach dem Verlassen beispielsweise eines Obetrums od. dgl. schliessen, so daß nicht nur eine kreisförmige Aufnahme 20a für die Dosen sondern auch eine Bohrung 34 zum Festlegen des Fangstiftes 33 ausgebildet wird.

Der Fangstift 33 liegt an der Kette 25 fest und dient zum Fangen von Dosen 7, welche insbesondere einen nur geringen Durchmesser aufweisen. In Figur 6 ist gezeigt, wie beispielsweise die Kette 25 von oben kommt, ohne daß sich auf den Fangstiften 33 Dosen befinden. Die Kette 25 umläuft dann teilweise eine Umlenkrolle 35, wobei diese Umlenkrolle 35 die Kette 25 und die Fangstifte 33 so führt, daß die Fangstifte 33 in den Bereich der sich schliessenden Halbbohrungen 32 gelangen. Dies geschieht am besten in der Nähe eines Scheitels des Bandes 27, da dort die Schienen 18a am weitesten geöffnet sind. Im weiteren Verlauf ist die Kette bevorzugt an beispielsweise einem Zahnkranz festgelegt geführt, wobei dieser Zahnkranz mit dem Obertrum 26 läuft. Hierdurch kann es keinen Versatz der Kette gegenüber dem Band 27 geben.

Beim Schließen der Schienen 18a klemmen die Halbbohrungen 32 zweier benachbarter Schienen 18a jeweils einen Fangstift 33 ein, wobei sich eine Spitze 36 dieses Fangstiftes 32 nahe einer Öffnung 37 der kreisförmigen Aufnahme 20 befindet. Wird dann eine Dose geringeren Durchmessers aus beispielsweise einer kreisförmigen Aufnahme einer Walze des Spülbades auf das Band 27 übergeben, so geschieht dies gut geführt, da beispielsweise die Dose noch nicht die Aufnahme der Walze ganz verlassen hat und dennoch schon von dem Fangstift 33 gefangen ist.

Die Halbbohrungen 32, welche dann die Bohrung 34 erzeugen, brauchen nicht unbedingt zentrisch angeordnet zu sein. Je nach dem, welcher Durchmesser und in welcher Lage die Dose gefangen werden soll, kann sich die Bohrung 34 an einer anderen Stelle innerhalb der Aufnahme 20 befinden. Hier kann jedem Erfordernis Rechnung getragen werden.

Nachdem die Dosen gemäß Figur 6 von den Fangstiften 33 gefangen sind, umschlingt das Band ein nicht näher gezeigtes Untertrum, wobei sich die Schienen 18a wieder öffnen. Hierdurch wird ein Schlitz 38 zwischen zwei Schienen freigegeben, welcher größer ist als ein Durchmesser der Dose 7. Dadurch kann die Dose 7 aus der Aufnahme 20 gleiten und wird, am Fangstift 33 hängend einer weiteren Behandlung bzw. Übergabe zugeführt.

Während in Figur 2 eine Walzenanordnung gezeigt ist, bei der sämtliche Walzen an einer gemeinsamen Drehwelle 13 angeordnet sind, befinden sich Walzen 11e, 11f und 11g um 90° gedreht innerhalb eines Behälters 12a, wobei beispielsweise die Walzen 11f und 11g in einer Waschzone und die Walze 11e in einer Spülzone angeordnet ist. Jede Walze 11e, 11f und 11g hat eine eigene Drehwelle 13e, 13f und 13g, so daß vor allem eine Reparatur der einzelnen Walzen wesentlich erleichtert ist. Ferner sind zwischen den einzelnen Walzen keine zusätzlichen Abstützungen notwendig, wie dies bei einer durchgehenden langen Drehwelle 13 gemäß Figur 2 der Fall sein kann. Wartung und Verschleiß sind minimiert.

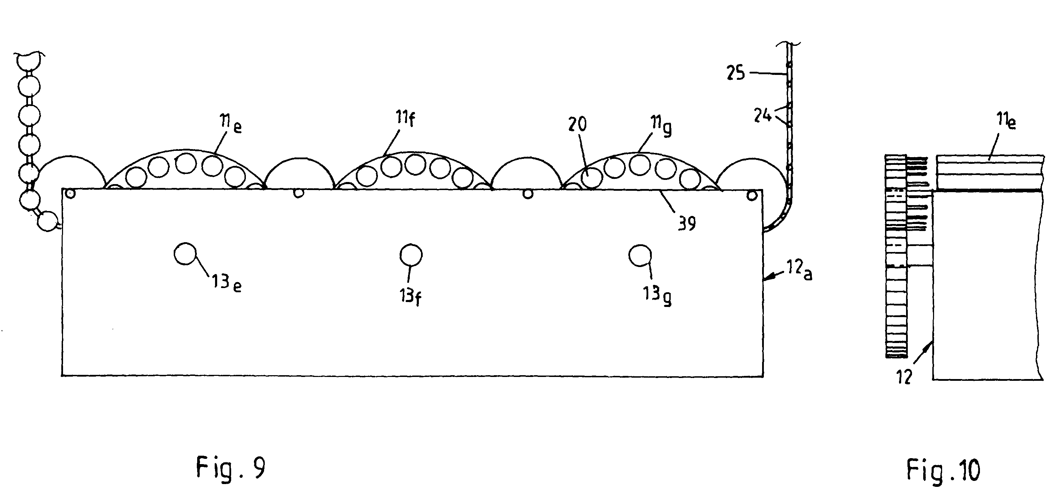

Die Übergabe der Dose von einer Walze zur anderen erfolgt hier durch Übergabe auf eine Kette 25 mit Dornen 24, wobei die Kette 25 über diverse, nicht näher gezeigte Umlenkrollen so geführt ist, daß sie wellenförmig zwischen den einzelnen Walzen 11e, 11f und 11g verläuft. Dabei verläuft die Kette 25 allerdings nicht innerhalb des Behälters 12a sondern außerhalb, wie dies in Figur 10 erkennbar ist.

Die Dorne 24 und die kreisförmigen Aufnahmen 20 innerhalb der Walze sind so aufeinander abgestimmt, daß eine Dose in eine erste über einen Behälterrand 29 auftauchende Aufnahme 20 eingeschossen werden kann, während eine Dose aus einer Aufnahme 20 auf einen Dorn 24 geschossen wird, bevor die entsprechende Aufnahme hinter dem Behälterrand 39 verschwindet. Es versteht sich von selbst, daß an den entsprechenden Drehwellen 13e und 13f und 13g auch mehrere schmale Walzen 11e, 11f und 11g hintereinander angeordnet sein können, so daß eine Dose durch Weitertransport in eine andere Walze mit in dem entsprechenden Bad geführt ist.

Bevorzugt läuft im übrigen diese Kette 25 auch in den Trockenofen 5 ein, so daß hier keine zusätzliche Übergabe mehr notwendig ist.

## Patentansprüche

1. Vorrichtung zum Transport von Gegenständen, insbesondere von Hohlkörpern, wie Aerosoldosen, durch eine Wasch-, eine Spül- und/oder Trockenzone und/oder zur Übergabe von Hohlkörpern von einem Transportelement zu einem anderen,
dadurch gekennzeichnet,
daß auf einer Walze (11), einem Band (27) od. dgl. Schienen (18) parallel zueinander angeordnet sind, deren zueinander ausgerichtete Seitenwände konkave Höhlungen (19) aufweisen, so daß eine Aufnahme (20) für den Hohlkörper (7) gebildet ist, wobei die Aufnahme (20) querschnittlich etwa kreisförmig ausgebildet ist und einen Druchmesser (d) aufweist, der geringfügig größer ist als der Durchmesser (dl) des Hohlkörpers (7), daß die Schiene (18), welche aus Kunststoff besteht, austauschbar, beispielsweise von Krallenstreifen (21) eines Profils (16), welches auf der Walze (11) bzw. dem Band (27) festliegt, gehalten ist.

2. Vorrichtung nach Anspruch 1, dadurch gekennzeichnet, daß eine Schiene (18a) im Anschluß an die konkave Höhlung (19) eine Füllung (31) aufweist, in die eine Halbbohrung (32) eingeformt ist, wobei die Halbbohrung (32) zweier benachbarter Schienen (18a) eine Bohrung (34) zur Aufnahme eines Fangstiftes (33) ausbilden.

3. Vorrichtung nach Anspruch 1 oder 2, dadurch gekennzeichnet, daß die Walze (11) auf einer Drehwelle (13) angeordnet ist.

4. Vorrichtung nach Anspruch 1 oder 2, dadurch gekennzeichnet, daß das Band (27) zumindest ein Obertrum (26) und ein Untertrum teilweise umschlingt.

5. Vorrichtung nach wenigstens einem der Ansprüche 1 bis 4, dadurch gekennzeichnet, daß zumindest einer Aufnahme (20) eine Düse (22, 28, 30) zum Ein- und/oder Austragen des Hohlkörpers (7) mittels Druckluft zugeordnet ist.

6. Vorrichtung nach Anspruch 5, dadurch gekennzeichnet, daß andererseits der Düse (22, 28, 30) ein Anschlag (23, 29) in die lichte Weite der Aufnahme (20) einragt.

7. Vorrichtung nach wenigstens einem der Ansprüche 1 bis 6, dadurch gekennzeichnet, daß sowohl in der Waschzone (1) als auch in der Spülzone (2) zumindest eine Walze (11) und/oder ein Band (27) mit den Schienen (18) angeordnet ist.

8. Vorrichtung nach Anspruch 7, dadurch gekennzeichnet, daß die Walzen (11) bzw. Obertrum (26) und Untertrum für das Band (27) auf einer Drehwelle (13) sitzen, wobei die Aufnahmen (20) in einer Achse parallel zur Drehwelle (13) angeordnet sind.

9. Vorrichtung nach Anspruch 8, dadurch gekennzeichnet, daß alle Walzen (11a, 11b, 11c, 11d) auf einer Drehwelle (13) sitzen und diese sich sowohl durch Waschzone (1) als auch durch die Spülzone (2) erstreckt.

10. Vorrichtung nach Anspruch 8, dadurch gekennzeichnet, daß jede Walze (11e, 11f, 11g) an einer eigenen Drehwelle (13e, 13f, 13g) angeordnet ist, welche quer zur Förderrichtung der Dosen (7) verläuft.

11. Vorrichtung nach Anspruch 10, dadurch gekennzeichnet, daß mehrere Walzen (11e, 11f, 11g) hintereinander an der Drehwelle (13e, 13f, 13g) sitzen.

12. Vorrichtung nach Anspruch 10 oder 11, dadurch gekennzeichnet, daß den Walzen (11e, 11f, 11g) außerhalb des Behälters (12) eine Kette (25) mit Dornen (24) zugeordnet ist, über welche jede Dose (7) von einer Walze (11e, 11f, 11g) zur anderen gelangt.

13. Vorrichtung nach Anspruch 12, dadurch gekennzeichnet, daß die Kette auch durch die Trockenzone (5) läuft.

14. Vorrichtung nach wenigstens einem der Ansprüche 1 bis 13, dadurch gekennzeichnet, daß eine Walze (11) bzw. ein Band (27) als Übergabe zwischen zwei Ketten (4, 6, 9) und/oder einer Walze (11) bzw. einem Band (27) und einer Kette (4/9) angeordnet ist.

## Claims

1. Apparatus for conveying articles, more especially hollow bodies, such as aerosol cans, through a washing zone, a rinsing zone and/or a drying zone and/or for transferring hollow bodies from one conveying element to another, characterised in that rails (18) are disposed parallel to one another on a roller (11), a belt (27) or the like, the lateral walls of said rails being aligned with one another and comprising concave recesses (19), so that a receiving means (20) is formed for receiving the hollow body (7), the receiving means (20) being configured to have a substantially circular cross-section and having a diameter (d) which is slightly greater than the diameter (d₁) of the hollow body (7), and in that the rail (18), which is formed from plastics material, is retained by claw-like strips (21) of a profile (16), which is fixed on the roller (11) or respectively the belt (27).

2. Apparatus according to claim 1, characterised in that a rail (18a) has a filling (31) communicating with the concave recess (19), and a half-bore (32) moulded in said filling, the half-bore (32) of two adjacent rails (18a) forming a bore (34) for accommodating a gripping pin (33).

3. Apparatus according to claim 1 or 2, characterised in that the roller (11) is disposed on a rotary shaft (13).

4. Apparatus according to claim 1 or 2, characterised in that the belt (27) partially loops around at least one upper portion (26) and one lower portion.

5. Apparatus according to at least one of claims 1 to 4, characterised in that a nozzle (22, 28, 30) is associated with at least one receiving means (20) for feeding or discharging the hollow body (7) by means of compressed air.

6. Apparatus according to claim 5, characterised in that a stop member (23, 29), protrudes into the internal width of the receiving means (20) on the other side of the nozzle (22, 28, 30).

7. Apparatus according to at least one of claims 1 to 6, characterised in that at least one roller (11) and/or one belt (27), having the rails (18), is disposed both in the washing zone (1) and in the rinsing zone (2).

8. Apparatus according to claim 7, characterised in that the rollers (11) or respectively the upper portion (26) and lower portion for the belt (27) sit on a rotary shaft (13), the receiving means (20) being disposed in an axis parallel to the rotary shaft (13).

9. Apparatus according to claim 8, characterised in that all of the rollers (11a, 11b, 11c, 11d) sit on a rotary shaft (13), and said shaft extends both through the washing zone (1) and through the rinsing zone (2).

10. Apparatus according to claim 8, characterised in that each roller (lle, llf, llg) is disposed on its own rotary shaft (13e, 13f, 13g), which extends transversely relative to the feed direction of the cans (7).

11. Apparatus according to claim 10, characterised in that a plurality of rollers (11e, 11f, 11g) sit one behind the other on the rotary shaft (13e, 13f, 13g).

12. Apparatus according to claim 10 or 11, characterised in that a chain (25) with mandrels (24) is associated with the rollers (11e, 11f, 11g) externally of the container (12), via which chain each can (7) passes from one roller (11e, 11f, 11g) to the other.

13. Apparatus according to claim 12, characterised in that the chain also travels through the drying zone (5).

14. Apparatus according to at least one of claims 1 to 13, characterised in that a roller (11) or respectively a belt (27) is disposed as a transfer means between two chains (4, 6, 9) and/or a roller (11) or respectively a belt (27) and a chain (4/9).

## Revendications

1. Dispositif pour le transport d'objets, notamment de corps creux tels que des boîtes d'aérosols, à travers une zone de lavage, une zone de rinçage et/ou de séchage et/ou de transfert des corps creux d'un élément de transport à un autre,
caractérisé par
des rails (18) prévus en parallèle sur un tambour (11), une bande (27) ou un moyen analogue, et les parois latérales de ces rails comportent des cavités concaves (19) pour former un logement (20) pour les corps creux (7), le logement (20) ayant une section sensiblement circulaire et un diamètre (d) légèrement supérieur au diamètre (d1) du corps creux (7), les rails (18) en matière plastique étant maintenus par les bandes à griffes (21) d'un profilé (16) fixé sur le tambour (11) ou la bande (27).

2. Dispositif selon la revendication 1,
caractérisé en ce qu'
à la suite de la cavité concave (19), un rail (18a) comporte une garniture (31) dans laquelle est réalisé un demi-perçage (32) et le demi-perçage (32) de deux rails (18a) adjacents forme un perçage (34) pour recevoir une tige de préhension (33).

3. Dispositif selon la revendication 1 ou 2,
caractérisé en ce que
le tambour (11) est monté sur un arbre tournant (13).

4. Dispositif selon la revendication 1 ou 2,
caractérisé en ce que
la bande (27) entoure au moins partiellement un brin supérieur (26) et un brin inférieur.

5. Dispositif selon au moins l'une des revendications 1 à 4,
caractérisé en ce qu'
à au moins un logement (20) est associée une buse (28, 30) pour introduire et/ou extraire le corps creux (7) avec de l'air comprimé.

6. Dispositif selon la revendication 5,
caractérisé en ce qu'
une butée (23, 29) pénètre dans la largeur libre du logement (20) de l'autre côté de la buse (28, 30).

7. Dispositif selon au moins l'une des revendications 1 à 6,
caractérisé en ce qu'
à la fois dans la zone de lavage (1) et dans la zone de rinçage (2), il y a au moins un tambour (11) et/ou une bande (27) avec des rails (18).

8. Dispositif selon la revendication 7,
caractérisé en ce que
les tambours (11) ou brins supérieurs (26) et brins inférieurs de la bande (27) reposent sur un arbre de rotation (13), les logements (20) étant d'axes parallèles à celui de l'arbre tournant (13).

9. Dispositif selon la revendication 8,
caractérisé en ce que
tous les tambours (11a, 11b, 11c, 11d) sont montés sur un arbre tournant (13) et s'étendent à la fois dans la zone de lavage (1) et dans la zone de rinçage (2).

10. Dispositif selon la revendication 8,
caractérisé en ce que
chaque cylindre (11e, 11f, 11g) est monté sur un arbre tournant (13e, 13f, 13g) indépendant, et ces arbres sont dirigés transversalement à la direction de transfert des boîtes (7).

11. Dispositif selon la revendication 10,
caractérisé en ce que
plusieurs cylindres (11e, 11f, 11g) sont placés les uns à la suite des autres sur l'arbre tournant (13e, 13f, 13g).

12. Dispositif selon la revendication 10 ou 11,
caractérisé en ce que
les cylindres (11e, 11f, 11g) comportent, en dehors du réservoir (12), une chaîne (25) avec des broches (24) par lesquelles chaque boîte (7) passe d'un tambour à l'autre (11e, 11f, 11g).

13. Dispositif selon la revendication 12,
caractérisé en ce que
la chaîne passe également par la zone sèche (5).

14. Dispositif selon au moins l'une des revendications 1 à 13,
caractérisé par
un tambour (11) ou une bande (27) comme moyen de transfert entre deux chaînes (4, 6, 9) et/ou un tambour (11) et une bande (27) et une chaîne (4/9).
